# EUROPEAN PATENT APPLICATION

(11) **EP 4 789 897 A1**
(43) Date of publication of application: **12.08.2026**
(21) Application number: 25769534.6
(22) Date of filing: 10.03.2025
(51) Int. Cl.: B60L 3/00, B60L 53/00, B60L 58/12

(54) **DISTRIBUTED BATTERY PACK, VEHICLE, BATTERY MANAGEMENT METHOD AND DEVICE FOR VEHICLE, AND MEDIUM**

(30) Priority: 15.03.2024 CN 202410300020
(71) Applicant: University of Sanya, Sanya, Hainan 572022 (CN); Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Boult Wade Tennant LLP
(86) International application number: PCT/CN2025/081541
(87) International publication number: WO 2025/190204

(57) **Abstract**

A distributed battery assembly, a vehicle, a battery management method and device for the vehicle, and medium, relating to the technical field of vehicle batteries, where the distributed battery assembly (301) includes: a first battery pack (101) for free use by a user and a second battery pack (102) for paid use by the user; and a battery management unit, connected to the first battery pack (101) and the second battery pack (102); and each battery pack includes at least one battery cell. The battery packs in the battery assembly are divided into the first battery pack (101) for free use and the second battery pack (102) for paid use by the user, so as to reduce the frequency of using the second battery pack (102) by the user, and thus reduce the frequency of overcharging and over-discharging the distributed battery assembly, and improve battery safety.

## Description

This application claims priority to Chinese Patent Application No. 202410300020.4, filed with the China National Intellectual Property Administration on March 15, 2024, and entitled "DISTRIBUTED BATTERY ASSEMBLY, VEHICLE, BATTERY MANAGEMENT METHOD AND DEVICE FOR VEHICLE, AND MEDIUM", the entire content of which is incorporated herein by reference.

### TECHNICAL FIELD

The present application relates to, but is not limited to, the technical field of vehicle batteries, and in particular, to a distributed battery assembly, a vehicle, a battery management method and device for the vehicle, and a medium.

### BACKGROUND

With the development of technology and people's increasing demands for environmental protection, electric vehicles have attracted more and more attention. The electric vehicles are equipped with batteries that power motors and other electrical components, enabling the electric vehicles to operate normally.

Users may have a usage habit of overcharging or over-discharging the batteries. Overcharging and over-discharging the batteries may accelerate the degradation speed of the batteries, shorten battery lifespan, and also increase the risk of battery spontaneous combustion, i.e., battery thermal runaway, resulting in low battery safety.

### SUMMARY

The following is a summary of the subject matter described in detail herein. This summary is not intended to limit the scope of the claims.

The present application provides a distributed battery assembly, a vehicle, a battery management method and device for the vehicle, and a medium. The battery packs in the battery assembly are divided into a first battery pack for free use and a second battery pack for paid use by a user, to reduce the frequency of the user using the second battery pack, and further to reduce the frequency of overcharging and over-discharging of the distributed battery assembly, improving battery safety.

In a first aspect, the present application provides a distributed battery assembly, including:
a first battery pack for free use by a user and a second battery pack for paid use by the user; and
a battery management unit, connected to the first battery pack and the second battery pack respectively;
where each battery pack includes at least one battery cell.

In a possible design of the first aspect, a performance indicator of the battery cell in the first battery pack is higher than a performance indicator of the battery cell in the second battery pack, and the performance indicator of each battery cell is a value calculated according to a performance parameter of the battery cell and is used to measure battery performance.

In a possible design of the first aspect, the performance parameter of each battery cell includes at least one of voltage information, resistance information, current information, and temperature information.

In a possible design of the first aspect, the battery cells in the first battery pack and the battery cells in the second battery pack are the same type of battery with the same chemical properties.

In a possible design of the first aspect, the battery cells in the first battery pack and the battery cells in the second battery pack are different types of batteries with different chemical properties.

In a possible design of the first aspect, the battery cell is a lithium battery or a lithium iron phosphate battery.

In a possible design of the first aspect, the battery cell in the first or second battery pack includes at least a power battery or an energy battery.

In a second aspect, the present application provides a vehicle equipped with the distributed battery assembly as described above and a control unit;
the control unit is connected to the battery management unit of the distributed battery assembly; and
the control unit is configured to manage the first battery pack for free use by the user and the second battery pack for paid use by the user according to the performance parameters of the battery cells in the distributed battery assembly.

In a possible design of the second aspect, the control unit includes:
a performance indicator calculation module, configured to calculate the performance indicator of each battery cell according to the performance parameter of each battery cell; and
a conversion module, configured to, if the performance indicator of any battery cell in the first battery pack is lower than a preset performance indicator threshold, convert the battery cell to the second battery pack.

In a third aspect, the present application provides a battery management method for a vehicle, including:
acquiring a performance parameter of each battery cell in a distributed battery assembly of the vehicle, where the distributed battery assembly includes a first battery pack for free use by a user and a second battery pack for paid use by the user, and each battery pack includes at least one battery cell;
calculating a performance indicator of each battery cell according to the performance parameter of each battery cell, where the performance indicator is configured to measure battery performance;
determining whether there is a target battery in the first battery pack whose performance indicator is lower than a preset performance indicator threshold; and
if there is a target battery in the first battery pack whose performance indicator is lower than the preset performance indicator threshold, converting the target battery to the second battery pack.

In a fourth aspect, the present application provides a battery management device for a vehicle, including:
an acquisition module, configured to acquire a performance parameter of each battery cell in a distributed battery assembly of the vehicle, where the distributed battery assembly includes a first battery pack for free use by a user and a second battery pack for paid use by the user, and each battery pack includes at least one battery cell;
a processing module, configured to:
   calculate a performance indicator of each battery cell according to the performance parameter of each battery cell, where the performance indicator is configured to measure battery performance; and
   determine whether there is a target battery in the first battery pack whose performance indicator is lower than a preset performance indicator threshold; and
   a conversion module, configured to, if there is a target battery in the first battery pack whose performance indicator is lower than the preset performance indicator threshold, convert the target battery to the second battery pack.

In a fifth aspect, the present application provides a readable storage medium stored with a computer program, which, when executed by a processor, implements the battery management method for the vehicle as described in the third aspect.

In a sixth aspect, the present application provides a computer program product, including a computer program which, when executed by a processor, is configured to implement the battery management method for the vehicle as described in the third aspect.

A distributed battery assembly provided in the embodiments of the present application can reduce the cost of purchasing a vehicle for consumers. Battery cells in the battery assembly are divided into a first battery pack for free use by a user and a second battery pack for paid use by the user. For ordinary short-distance or daily use, consumers can use the free first battery pack, and only need to pay for the first battery pack when purchasing the vehicle. This reduces the cost of purchasing a vehicle for consumers.

A distributed battery assembly provided in the embodiments of the present application can prevent the battery phantom charge; when the performance of some battery cells in the first battery pack degrades, the battery cells with good performance in the second battery pack are converted to the first battery pack for use, so that the first battery pack used by the customer on a daily basis always contains battery cells with good performance, thus avoiding the phenomenon of phantom charge during daily use.

A distributed battery assembly provided in the embodiments of the present application can reduce the cost for using a vehicle for a consumer. Most consumers' electric vehicles only have a small number of long-distance trips and demand for long-range batteries every year. The present application allows the paid use of a second battery pack during long-distance trips to be based on the number of trips instead of purchasing it directly, thus effectively reducing the cost of vehicle use for consumers.

The present application provides a distributed battery assembly, a vehicle, and a battery management method and device for the vehicle, and a medium. The distributed battery assembly includes: a first battery pack for free use by the user and a second battery pack for paid use by the user; and a battery management unit, connected to the first battery pack and the second battery pack respectively; and each battery pack includes at least one battery cell. The fact that the battery packs in the battery assembly are divided into the first battery pack for free use and the second battery pack for paid use by the user, can reduce the frequency of using the second battery pack by the user, then reduce the frequency of overcharging and over-discharging of the distributed battery assembly, and improve battery safety.

After reading and understanding the drawings and detailed description, other aspects can be understood.

### BRIEF DESCRIPTION OF DRAWINGS

The accompanying drawings of the embodiments of the present application will be briefly described below. Obviously, the drawings described below are some embodiments of the present application. For those skilled in the art, other drawings can be obtained from these drawings without creative effort.
FIG. 1 is a schematic structural diagram of a distributed battery assembly provided in the present application.
FIG. 2 is a schematic structural diagram of a vehicle provided in the present application.
FIG. 3 is a schematic structural diagram of a control unit provided in the present application.
FIG. 4 is a flowchart of an embodiment of a battery management method for a vehicle provided in the present application.
FIG. 5 is a schematic structural diagram of an embodiment of a battery management device for a vehicle provided in the present application.

### DESCRIPTION OF EMBODIMENTS

The implementations of the present application are illustrated through specific examples in the following. Those skilled in the art may easily understand other advantages and effects of the present application from the content disclosed in this specification. The present application may also be implemented or applied through other different specific implementations, and each detail in this specification may also be modified or changed according to different viewpoints and applications without departing from the spirit of the present application. It should be noted that, unless otherwise specified, the following embodiments and features therein can be combined with each other. It should also be understood that the terms used in the embodiments of the present application are for describing specific implementations and not for limiting the protection scope of the present application. Test methods in the following embodiments that do not specify specific conditions are generally performed under conventional conditions or according to the conditions recommended by each manufacturer.

When numerical ranges are given in the embodiments, it should be understood that, unless otherwise stated in the present application, both endpoints of each numerical range and any value between the two endpoints may be selected. Unless otherwise defined, all technical and scientific terms used in the present application can be based on the prior art known to those skilled in the art and the descriptions in the present application, any method, device and material in the prior art, which are similar to or equivalent to any method, device and material described in the embodiments of the present application, may be used to implement the present application.

Terms "first" "second" "third," "fourth," etc. (if present) in the description and claims of the present application and the above drawings are used to distinguish similar objects, and are not necessarily used to describe a specific order or sequence. It may be understood that data used in such manner may be interchanged in appropriate cases, such that the embodiments of the present application described herein can be embodied in an order other than those illustrated or described herein. Furthermore, the terms "including" and "having" and any variations thereof are intended to cover a non-exclusive inclusion; for example, processes, methods, systems, products, or devices that include a series of steps or units is not necessarily limited to those steps or units explicitly listed, but may include other steps or units not explicitly listed or inherent to these processes, methods, products, or devices.

With the development of technology and people's increasing demands for environmental protection, electric vehicles have attracted more and more attention. The electric vehicles are equipped with batteries that power motors and other electrical components, enabling the electric vehicles to operate normally.

Since users lack understanding of battery maintenance characteristics, they often have usage habits of overcharging or over-discharging the batteries. Overcharging and over-discharging the batteries may accelerate the degradation speed of the batteries and shorten the lifespan of the batteries. Furthermore, overcharging and over-discharging may also lead to excessive energy storage within the batteries, increasing the risk of spontaneous combustion. Each charging and discharging cause irreversible damage to the batteries, and this damage has a cumulative effect, and the more times it occurs, the more significant the impact on battery performance. Many consumers apply their usage habits of gasoline vehicles to electric vehicles, worrying about battery range. These consumers lack understanding of battery maintenance characteristics and may intentionally or unintentionally overcharge or over-discharge the battery, severely affecting the lifespan of the battery and increasing the risk of thermal runaway of the battery.

On this basis, the inventors discovered during their research on battery assemblies that reducing the frequency of overcharging and over-discharging can effectively improve battery safety. Therefore, a distributed battery assembly may be designed, including a first battery pack for free use by the user and a second battery pack for paid use by the user. During discharging, when the performance of the first battery pack is low, the user may pay to use the second battery pack. Since the users need to pay, they will reduce the frequency of using the second battery pack, thus reducing the frequency of overcharging and over-discharging of the battery assembly and improving battery safety. Furthermore, since the performance of the battery cells in the first battery pack is higher than the performance of the battery cells in the second battery pack, the second battery pack is more prone to overcharging and over-discharging. Reducing the frequency of using the second battery pack reduces the frequency of overcharging and over-discharging and improves battery safety. During charging, when the performance of the battery cell in the first battery pack is high, the battery cell is converted to the second battery pack. If the user wants to continue charging, they may pay to use the second battery pack. Since the users need to pay, they will reduce the frequency of using the second battery pack, thus reducing the frequency of overcharging and over-discharging and improving battery safety.

The application scenarios of the distributed battery assembly provided in the present application are described below.

Exemplarily, an electric vehicle is equipped with a distributed battery assembly, which includes a first battery pack for free use by a user and a second battery pack for paid use by the user, and the user is driving the electric vehicle.

The vehicle is currently being powered by the first battery pack. As the vehicle continues to travel, the performance of a battery cell in the first battery pack gradually degrades. When the performance drops to a certain level, a battery management unit in the distributed battery assembly converts that battery cell to the second battery pack. When the number of the battery cells in the first battery pack is small, the user may pay to use the second battery pack. Therefore, when the user learns that the performance of the first battery pack is low, that is, the number of the battery cells in the first battery pack is small, he will choose to charge the battery so as to avoid paying to use the second battery pack, thus preventing the second battery pack from over-discharging.

When charging, the battery management unit converts the battery cells in the second battery pack to the first battery pack. Then, the battery cells in the first battery pack are charged. When one battery cell in the first battery pack has high performance, the battery management unit stops charging the battery cell, locks it, and converts it to the second battery pack. If the user still wants to charge that battery cell, he may pay to unlock it, enabling the charging of the battery cell. After the user pays, the battery management unit continues charging the battery cell. Once the charging is completed, the battery management unit converts the battery cell in the second battery pack to the first battery pack for subsequent use.

It should be noted that the above scenario is only an example of an application scenario provided in the embodiments of the present application. The actual form of each device included in the scenario and interaction methods between devices are not limited in the embodiments of the present application, and may be set according to actual needs in the specific application of the solutions.

Hereinafter, technical solutions of the present application are described in detail through specific embodiments. It should be noted that the following specific embodiments may be combined with each other, and the same or similar concepts or processes may not be described again in some embodiments.

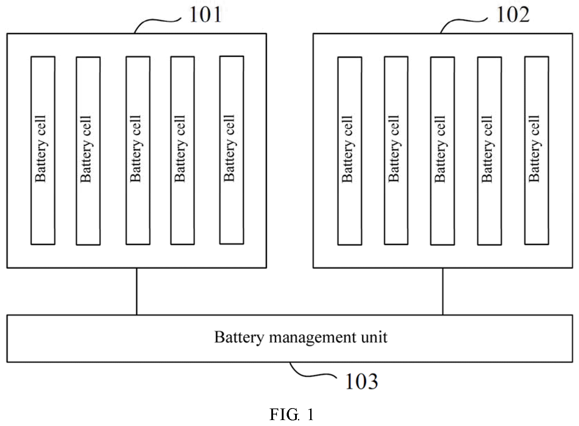

FIG. 1 is a schematic structural diagram of a distributed battery assembly provided in the present application. As shown in FIG. 1, the distributed battery assembly includes a first battery pack 101 for free use by a user, a second battery pack 102 for paid use by the user, and a battery management unit 103.

The battery management unit 103 is connected to the first battery pack 101 and the second battery pack 102 respectively.

Each battery pack includes at least one battery cell.

The battery management unit 103 may manage each battery cell in the first battery pack 101 and second battery pack 102 to determine whether a battery cell belongs to the first battery pack 101 or the second battery pack 102. When there is a battery cell in the first battery pack 101 whose performance indicator is lower than preset performance indicator threshold, the battery cell may be converted to the second battery pack 102 to reduce the frequency of over-discharging.

Specifically, each battery cell has a corresponding identifier. The battery management unit 103 may configure the battery cell for free use or paid use according to the identifier, so as to determine whether the battery cell belongs to the first battery pack 101 or the second battery pack 102, and complete the conversion process.

It should be noted that a manner for configuring a battery cell for free use or paid use may be as follows: each battery cell also has a corresponding battery pack identifier; when its corresponding battery pack identifier is 1, it indicates that the battery cell is for free use and belongs to the first battery pack 101; and when its corresponding battery pack identifier is 2, it indicates that the battery cell is for paid use and belongs to the second battery pack 102. When the battery management unit 103 changes the battery pack identifier corresponding to a battery cell from 1 to 2, it completes the configuration of the battery cell for paid use and completes the conversion of the battery cell from the first battery pack 101 to the second battery pack 102. When the battery management unit 103 changes the battery pack identifier corresponding to a battery cell from 2 to 1, it completes the configuration of the battery cell for free use and completes the conversion of the battery cell from the second battery pack 102 to the first battery pack 101. The identifiers of the battery packs may also be 0, 3, 4, 5, etc. The identifiers of the battery packs are not limited in the embodiments of the present application and may be set according to the actual situation.

The battery management unit 103 is also configured to lock or unlock the battery cells in the second battery pack 102. Specifically, when the number of battery cells in the first battery pack is less than a preset threshold, the battery management unit 103 locks the battery cells in the second battery pack 102. At this time, the user may choose to pay for use of the second battery pack 102 according to actual needs. After the user pays a corresponding fee, the battery management unit 103 immediately unlocks the second battery pack 102, so that the user can immediately use the second battery pack 102 and continue driving or charging. This locking and unlocking manner effectively meets the user's power requirements, thereby improving the user experience.

It should be noted that the number of the battery cells in the first battery pack 101 and the second battery pack 102 may be 1, 5, 10, 500, etc. The number of the battery cells in the first battery pack 101 and the second battery pack 102 is not limited in the embodiments of the present application, and may be determined according to the actual situation.

In a possible implementation, the battery cells in the first battery pack 101 and the battery cells in the second battery pack 102 may be the same type of battery with the same chemical properties, or may be different types of batteries with different chemical properties.

The type of the battery cells in the first battery pack 101 and the second battery pack 102 is also distinguished by their chemical properties; and the battery cells may be lithium batteries or lithium iron phosphate batteries.

Lithium-ion batteries, with high energy density and lightweight characteristics, are applicable to electric vehicles with high requirements for energy density and weight. Lithium iron phosphate batteries offer high safety and stability, making them suitable for application scenarios requiring higher safety.

Regarding the type of the battery cells in the first battery pack 101 and the second battery pack 102, the battery cells may also be power batteries or energy batteries.

Compared with the energy batteries, the power batteries have higher output power per unit time, but store less energy per unit volume or weight, resulting in lower energy density and shorter cycle life. The energy batteries store more energy per unit volume or weight, but have relatively lower output power per unit time, higher energy density, and longer cycle life.

By selecting suitable chemical properties and types of battery cells, the distributed battery assembly can meet the needs of different vehicles and users, while providing more flexible and diversified energy solutions.

The chemical properties or type of battery cells are not limited in the embodiments of the present application, and may be determined according to the actual situation.

When charging, the battery management unit 103 configures all the battery cells for free use, that is, converts all the battery cells to the first battery pack 101. The battery cells in the first battery pack 101 are then charged, and the performance indicator of each battery cell is determined. When the performance indicator of a battery cell exceed a charging threshold, the battery management unit 103 locks this battery cell, stops charging it, and configures it for paid use, that is, converts it to the second battery pack 102. If the user still wants to charge the battery cell, they may unlock it by paying a fee in order to charge it. After payment by the user the battery management unit 103 unlocks the battery cell and continues charging it. After charging is completed, the battery management unit 103 converts the battery cells in the second battery pack 102 back to the first battery pack 101.

A distributed battery assembly provided in the present application includes: a first battery pack for free use by a user and a second battery pack for paid use by the user; and a battery management unit, connected to the first battery pack and the second battery pack respectively; where each battery pack includes at least one battery cell. The battery packs of the battery assembly are divided into the first battery pack for free use and the second battery pack for paid use. During discharging, when the performance of the first battery pack is low, the user may pay to use the second battery pack. Since the user needs to pay a fee, the user will reduce the frequency of using the second battery pack, thus reducing the frequency of over-discharging the battery assembly and improving battery safety. During charging, when the performance of a battery cell in the first battery pack is high, the battery cell is converted to the second battery pack, and the user may pay to use the second battery pack for continued charging. Since the user needs to pay a fee, the user will reduce the frequency of using the second battery pack, thereby reducing the frequency of over-discharging the battery assembly and improving battery safety.

The performance indicators of the battery cells in the first battery pack and the second battery pack are described below.

The performance indicators of the battery cells in the first battery pack are higher than the performance indicators of the battery cells in the second battery pack. The performance indicator of each battery cell is a value calculated according to the performance parameter of the battery cell and used to measure battery performance.

The performance parameter of each battery cell includes at least one of voltage information, resistance information, current information, and temperature information.

Battery over-discharging, battery aging, excessively high or low temperature, and circuit malfunctions may all affect battery performance. The performance indicator of the battery cell may be calculated from at least one of voltage information, resistance information, current information, and temperature information. The performance indicator may be the negative of the voltage drop rate, the negative of the resistance value, the negative of the current drop rate, or the negative of the battery temperature, etc. A higher voltage drop rate, larger resistance value, higher current drop rate and higher battery temperature all indicate poorer battery performance. The smaller the performance indicator value, the poorer the battery performance. The performance indicator is not limited in the embodiments of the present application, and may be determined according to the actual situation.

The performance indicator is calculated by using different performance parameters so that the performance indicator may be more accurate and better reflect the performance of the battery cells.

In the distributed battery assembly provided in the present application, the performance indicators of the battery cells in the first battery pack are higher than the performance indicators of the battery cells in the second battery pack. The second battery pack is more prone to over-discharge. By a paid use method, the frequency of the user using the second battery pack is reduced, and thus the frequency of over-discharging may be reduced, which improves battery safety.

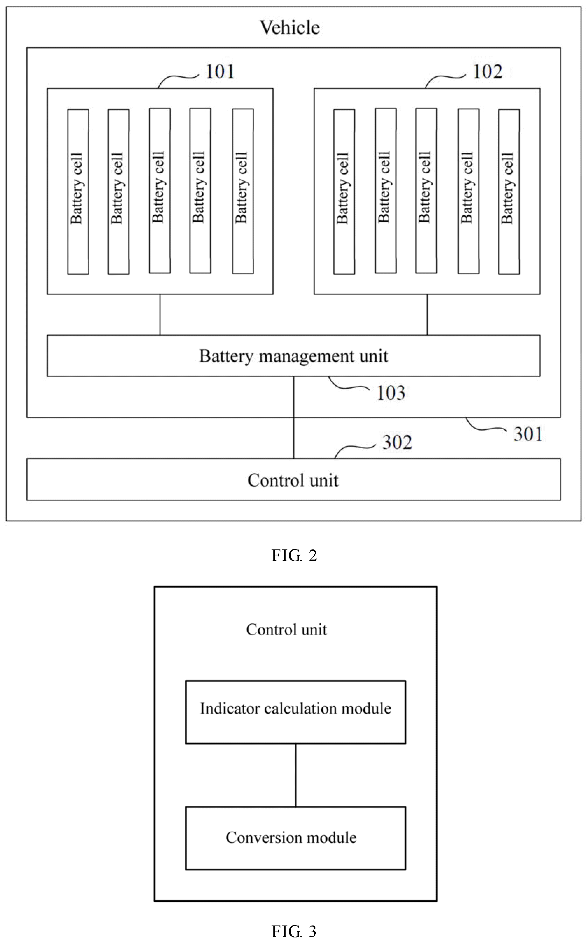

FIG. 2 is a schematic structural diagram of a vehicle provided in the present application. As shown in FIG. 2, the vehicle includes a distributed battery assembly 301 and a control unit 302. The distributed battery assembly 301 includes: a first battery pack 101 for free use by a user and a second battery pack 102 for paid use by the user; and a battery management unit 103, connected to the first battery pack 101 and the second battery pack 102 respectively; where each battery pack includes at least one battery cell.

The control unit 302 is connected to the battery management unit 103 of the distributed battery assembly 301.

The control unit 302 is configured to manage the first battery pack 101 for free use by the user and the second battery pack 102 for paid use by the user according to the performance parameter of the battery cells in the distributed battery assembly 301.

Specifically, FIG. 3 is a schematic structural diagram of a control unit provided in the present application. As shown in FIG. 3, the control unit includes a performance indicator calculation module and a conversion module.

The performance indicator calculation module is configured to calculate the performance indicator of each battery cell according to the performance parameter of each battery cell.

The performance indicator may be the negative of the voltage drop rate, the negative of the resistance value, the negative of the current drop rate, the negative of the battery temperature, etc. A higher voltage drop rate, larger resistance value, higher current drop rate, and higher battery temperature all indicate poorer battery performance. The smaller the performance indicator value, the poorer the battery performance. The performance indicator is not limited in the present application, and may be determined according to the actual situation.

The conversion module is configured to, if the performance indicator of any battery cell in the first battery pack is lower than a preset performance indicator threshold, convert this battery cell to the second battery pack.

It should be noted that the performance indicator thresholds may be -0.5 V/min, -0.6 V/min, -0.8 V/min, -80 milliohms, -90 milliohms, -100 milliohms, -4 A/min, -5 A/min, -6 A/min, -50°C, -60°C, -70°C, etc. The performance indicator thresholds are not limited in the embodiments of the present application, and may be set according to the actual situation.

Exemplarily, a battery cell has a performance indicator of -0.9 V/min and a performance indicator threshold of -0.5 V/min, and since -0.9 < -0.5, this battery cell is converted to the second battery pack. A battery cell has a performance indicator of -110 milliohms and a performance indicator threshold of -90 milliohms, and since -110 < -90, this battery cell is converted to the second battery pack. A battery cell has a performance indicator of -10 A/min and a performance indicator threshold of -6 A/min, and since -10 < -6, this battery cell is converted to the second battery pack. A battery cell has a performance indicator of -75°C and a performance indicator threshold of -70°C, and since -75 < -70, this battery cell is converted to the second battery pack.

It should be noted that a manner for converting the battery cell in the first battery pack to the second battery pack is as follows: each battery cell has a corresponding identifier, the control unit sends to the battery management unit a conversion command including the identifier of the battery cell to be converted; and the battery management unit configures the battery cell for paid use according to the identifier of the battery cell in the conversion command, thus realizing the conversion to the second battery pack. The conversion process does not involve change of the battery cell in spatial position.

When the control unit determines that the number of the battery cells in the first battery pack is less than a preset threshold, the control unit may output payment information, and the user needs to pay before using the second battery pack; and while outputting payment information, the control unit may send a locking command to the battery management unit, and the battery management unit locks the battery cells in the second battery pack to prevent them from discharging, thus ensuring battery safety. The preset threshold may be 2, 5, 100, etc. the preset threshold is not limited in the embodiments of the present application, and may be set according to the actual situation.

As a viable payment manner, the vehicle is also equipped with an on-board display terminal connected to the control unit. Payment information is a payment page or a payment two-dimensional code, and the control unit shows the payment page or the payment two-dimensional code by the on-board display terminal. The payment two-dimensional code is used for the user to scan and pay a fee for using the second battery pack. Users may complete the payment on the payment page or by scanning the two-dimensional code using a terminal device.

As another payment manner, the control unit sends the payment information to the user's terminal device, and the user completes the payment on the terminal device.

After the user completes the payment, the payment platform receives payment success information and sends an unlock command to the control unit of the vehicle. The control unit sends the unlock command to the battery management unit, and the battery management unit unlocks the battery cells in the second battery pack and supply power by using the second battery pack. If the user does not pay, the battery management unit will take corresponding measures, such as cutting off the power supply, to ensure safe and stable operation of the vehicle.

When charging, the control unit sends a charging command to the battery management unit, the battery management unit converts the battery cells in the second battery pack to the first battery pack, and charges the battery cells in the first battery pack. The control unit then determines the performance indicator of each battery cell in the first battery pack. When the performance indicator of a battery cell exceeds a charging threshold, the control unit sends a stop charging command carrying the identifier of the battery cell to the battery management unit. The battery management unit locks the battery cell according to the identifier of the battery cell, stops charging the battery cell, and converts the battery cell to the second battery pack. If the user still wants to charge the battery cell, he may pay to unlock the battery cell to achieve the charging of the battery cell. After the user pays, the control unit sends a recharging command carrying the identifier of the battery cell to the battery management unit. The battery management unit unlocks the battery cell and continues charging the battery cell. After the charging is completed, the control unit sends a conversion command to the battery management unit, and the battery management unit converts the battery cells in the second battery pack to the first battery pack for subsequent use.

It should be noted that the payment process during charging is similar to that during discharging, and will not be described in detail here.

When a battery cell in the first battery pack has a performance indicator lower than a preset performance indicator threshold, the vehicle provided in the present application converts that battery cell to the second battery pack, so that the performance indicator of the battery cell in the first battery pack is higher than the performance indicator of the battery cell in the second battery pack. Then, since the second battery pack requires payment for use, the frequency of using the second battery pack can be reduced, thereby reducing the frequency of overcharging and over-discharging and improving battery safety.

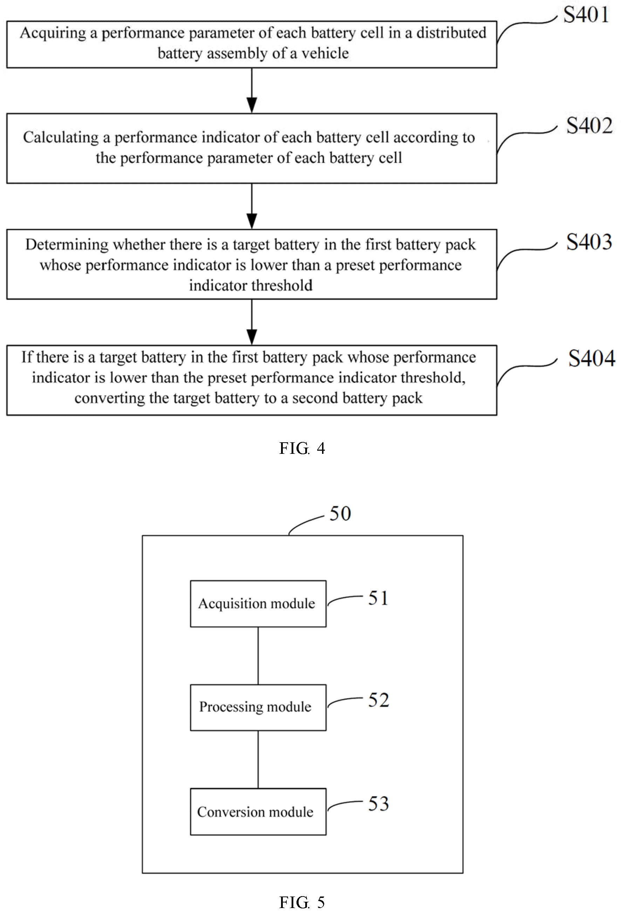

FIG. 4 is a flowchart of an embodiment of a battery management method for a vehicle provided in the present application. The execution entity of the embodiment of the present application may be a control unit of the vehicle or a cloud platform, which cloud platform may be deployed on a device such as server, terminal device, etc. The control unit is taken as an example below for explanation. The method in this embodiment may be implemented through software, hardware, or a combination of software and hardware. As shown in FIG. 4, the battery management method for the vehicle specifically includes the following steps.

S401: acquiring a performance parameter of each battery cell in a distributed battery assembly of the vehicle.

In this step, in order to reduce the frequency of overcharging and over-discharging the battery assembly, the performance parameter of each battery cell in the distributed battery assembly of the vehicle is first acquired.

The distributed battery assembly includes a first battery pack for free use by a user and a second battery pack for paid use by the user, each battery pack includes at least one battery cell, and a battery management unit in the distributed battery assembly is connected to the first battery pack and the second battery pack respectively.

Since the control unit is connected to the battery management unit, and the battery management unit is connected to the first battery pack and the second battery pack, the control unit may acquire the performance parameter of each battery cell through the battery management unit.

It should be noted that when the execution entity is a cloud platform, the control unit establishes a wireless communication connection with the cloud platform. After acquiring the performance parameter of each battery cell through the battery management unit, the control unit sends the performance parameter to the cloud platform through the wireless communication connection, and the cloud platform may then acquire the performance parameter.

It should be noted that the performance parameter of each battery cell includes at least one of voltage information, resistance information, current information, and temperature information.

S402: calculating a performance indicator of each battery cell according to the performance parameter of each battery cell.

In this step, after the control unit acquires the performance parameter of each battery cell, in order to determine the performance of each battery cell, the control unit calculates the performance indicator of each battery cell according to the performance parameter of each battery cell. The performance indicator is used to measure the battery performance.

It should be noted that the performance indicator may be the negative of the voltage drop rate, the negative of the resistance value, the negative of the current drop rate, the negative of the battery temperature, etc. The performance indicator is not limited in the present application, and may be determined according to the actual situation.

It should be noted that the control unit may acquire only the performance parameter of each battery cell in the first battery pack, and calculate only the performance indicator of each battery cell in the first battery pack.

S403: determining whether there is a target battery in the first battery pack whose performance indicator is lower than a preset performance indicator threshold.

In this step, after the control unit calculates the performance indicator of each battery cell, in order to reduce the frequency of over-discharging, the control unit determines whether there is a target battery in the first battery pack whose performance indicator is lower than the preset performance indicator threshold.

S404: if there is a target battery in the first battery pack whose performance indicator is lower than the preset performance indicator threshold, converting the target battery to the second battery pack.

In this step, if the control unit determines that there is a target battery in the first battery pack whose performance indicator is lower than the preset performance indicator threshold, which indicates that the performance of the target battery is poor and continued use may cause over-discharging, then the target battery is converted to the second battery pack.

A manner for converting the target battery to the second battery by the control unit is as follows: each battery cell has a corresponding identifier, the control unit sends a conversion command including the identifier of the target battery to the battery management unit; the battery management unit configures the target battery for paid use through the identifier of the target battery in the conversion command, completing the conversion process. The conversion process does not involve change of the battery cell in spatial position.

It should be noted that when the execution entity is a cloud platform, the cloud platform sends a conversion command including the identifier of the target battery to the control unit via a wireless communication connection. The control unit sends the conversion command to the battery management unit, and the battery management unit configures the target battery for paid use through the identifier of the target battery in the conversion command, completing the conversion process.

When the execution entity is a cloud platform, it helps to remotely manage the distributed battery assembly, and ensure battery safety, improving vehicle safety and maintenance convenience.

In the battery management method provided in this embodiment, the performance indicator of each battery cell is calculated, and when there is a target battery in the first battery pack whose performance indicator is lower than a preset performance indicator threshold, the target battery is converted to the second battery pack. Since the second battery pack requires payment for use, the frequency of using the second battery pack can be reduced, thereby reducing the frequency of overcharging and over-discharging and improving battery safety.

FIG. 5 is a schematic structural diagram of an embodiment of a battery management device for a vehicle provided in the present application. As shown in FIG. 5, the battery management device 50 includes:
an acquisition module 51, configured to acquire a performance parameter of each battery cell in a distributed battery assembly of the vehicle, where the distributed battery assembly includes a first battery pack for free use by a user and a second battery pack for paid use by the user, and each battery pack includes at least one battery cell;
a processing module 52, configured to:
   calculate a performance indicator of each battery cell according to the performance parameter of each battery cell, where the performance indicator is used to measure battery performance; and
   determine whether there is a target battery in the first battery pack whose performance indicator is lower than a preset performance indicator threshold; and
   a conversion module 53, configured to, if there is a target battery in the first battery pack whose performance indicator is lower than the preset performance indicator threshold, convert the target battery to the second battery pack.

The battery management device for the vehicle provided in this embodiment is used to execute the technical solution in any one of the foregoing method embodiments, its implementation principles and technical effects are similar thereto, and will not be described again here.

The present application also provides a readable storage medium storing a computer program thereon, which, when executed by a processor, implements the technical solution provided in any one of the foregoing method embodiments.

An embodiment of the present application also provides a computer program product, including a computer program, which, when executed by a processor, is configured to implement the technical solution provided in any one of the foregoing method embodiments.

Those ordinarily skilled in the art may understand that all or part of the steps in the above methods may be completed by a program instructing related hardware (e.g., a processor), and the program may be stored in a computer-readable storage medium, such as a read-only memory, a magnetic disk, or an optical disk. Optionally, all or part of the steps in the above embodiments may also be implemented by using one or more integrated circuits. Correspondingly, each module/unit in the above embodiments may be implemented in the form of hardware, for example, its corresponding functions are implemented by an integrated circuit, or may be implemented in the form of a software functional module, for example, its corresponding functions are implemented by a processor executing a program/instructions stored in memory. The present application is not limited to any particular combination of hardware and software.

Finally, it should be noted that each of the above embodiments is only used to illustrate the technical solutions of the present application, but not to limit them; although the present application has been illustrated in detail with reference to each of the foregoing embodiments, those ordinarily skilled in the art should understand that they may still modify the technical solution described in each of the foregoing embodiments, or make equivalent substitutions for some or all of the technical features therein; and these modifications or substitutions do not cause the essence of corresponding technical solutions to deviate from the scope of the technical solution of each embodiment of the present application.

## Claims

1. A distributed battery assembly, **characterized by** comprising:
a first battery pack for free use by a user and a second battery pack for paid use by the user; and
a battery management unit, connected to the first battery pack and the second battery pack respectively;
wherein each battery pack comprises at least one battery cell; and
a performance indicator of each battery cell is a value calculated according to a performance parameter of the battery cell and used to measure battery performance, and the performance parameter of each battery cell comprises at least one of voltage information, resistance information, current information, and temperature information.

2. A vehicle, **characterized by** comprising the distributed battery assembly according to claim 1 and a control unit;
wherein the control unit is connected to the battery management unit of the distributed battery assembly;
the control unit is configured to manage the first battery pack for free use by the user and the second battery pack for paid use by the user according to the performance parameter of the battery cell in the distributed battery assembly;
the control unit comprises:
a performance indicator calculation module, configured to calculate the performance indicator of each battery cell according to the performance parameter of each battery cell; and
a conversion module, configured to, if the performance indicator of any battery cell in the first battery pack is lower than a preset performance indicator threshold, convert this battery cell to the second battery pack.

3. A battery management method for a vehicle, **characterized by** comprising:
acquiring a performance parameter of each battery cell in a distributed battery assembly of the vehicle, wherein the distributed battery assembly comprises a first battery pack for free use by a user and a second battery pack for paid use by the user, and each battery pack comprises at least one battery cell;
calculating a performance indicator of each battery cell according to the performance parameter of each battery cell, wherein the performance indicator is used to measure battery performance;
determining whether there is a target battery in the first battery pack whose performance indicator is lower than a preset performance indicator threshold; and
if there is a target battery in the first battery pack whose performance indicator is lower than the preset performance indicator threshold, converting the target battery to the second battery pack.

4. A battery management device for a vehicle, **characterized by** comprising:
an acquisition module, configured to acquire a performance parameter of each battery cell in a distributed battery assembly of the vehicle, wherein the distributed battery assembly comprises a first battery pack for free use by a user and a second battery pack for paid use by the user, and each battery pack comprises at least one battery cell.
a processing module, configured to:
calculate a performance indicator of each battery cell according to the performance parameter of each battery cell, wherein the performance indicator is used to measure battery performance; and
determine whether there is a target battery in the first battery pack whose performance indicator is lower than a preset performance indicator threshold; and
a conversion module, configured to, if there is a target battery in the first battery pack whose performance indicator is lower than the preset performance indicator threshold, convert the target battery to the second battery pack.

5. A readable storage medium, **characterized in that** the readable storage medium is stored with a computer program, which, when executed by a processor, implements the battery management method for the vehicle according to claim 3.

6. A computer program product, **characterized by** comprising a computer program, which, when executed by a processor, is configured to implement the battery management method for the vehicle according to claim 3.
